Europäisches Patentamt

European Patent Office

Office européen des brevets

(19)

(11) Publication number: 0 488 292 A2

# EUROPEAN PATENT APPLICATION

(21) Application number: 91120406.3

(22) Date of filing: 28.11.91

(51) Int. Cl.5: G01B 11/24

(30) Priority: 29.11.90 JP 334008/90
19.04.91 JP 88490/91

(43) Date of publication of application:
03.06.92 Bulletin 92/23

(84) Designated Contracting States:
DE FR GB

(71) Applicant: MATSUSHITA ELECTRIC
INDUSTRIAL CO., LTD
1006, Oaza Kadoma, Kadoma-shi
Osaka 571(JP)

(72) Inventor: Sannomiya, Kunio
1-18-16, Mouridai
Atsugi-shi, Kanagawa-ken(JP)
Inventor: Tsuda, Yukifumi
2-8-1-15-301, Teraodai, Tama-ku
Kawasaki(JP)
Inventor: Ikegaya, Kazutoshi
Minami Rinkan Hairanzu 311, 2-5298-1,
Komatsubara
Zama-shi, Kanagawa-ken(JP)

(74) Representative: Pellmann, Hans-Bernd,
Dipl.-Ing. et al
Patentanwaltsbüro Tiedtke-Bühling-Kinne &
Partner, Bavariaring 4
W-8000 München 2(DE)

(54) Three-dimensional shape data reading system.

(57) A three-dimensional shape data reading system provided with a slit-light source for generating slit-light, a moving mechanism for moving an object to be measured, a camera for taking an image formed by scattered slit-light from the object, an analog-to-digital converter for converting a luminance signal into a digital image signal, an image memory for storing the image signal, a centeroid detecting unit for detecting the centroid of a picture formed by the slit-light scattered by the object from the image signal stored in the image memory, phase shift amount detecting unit for detecting a phase shift amount between the center of the picture formed by the scattered slit-light and a sampling pitch, a center detecting unit for detecting the center of the picture by correcting the centroid from the phase shift amount and a height calculating unit for calculating three-dimensional coordinates of the object from the detected center. Thus three-dimensional shape data can be obtained with high-precision.

FIG. 5

## BACKGROUND OF THE INVENTION

### 1. Field of The Invention

This invention relates to a non-contacting three-dimensional shape data reading system for reading data representing a three-dimensional shape of a material object without contacting the object and to a three-dimensional image data input system for reading image data on a region of an object having a two-dimensional spread.

### 2. Description of The Related Art

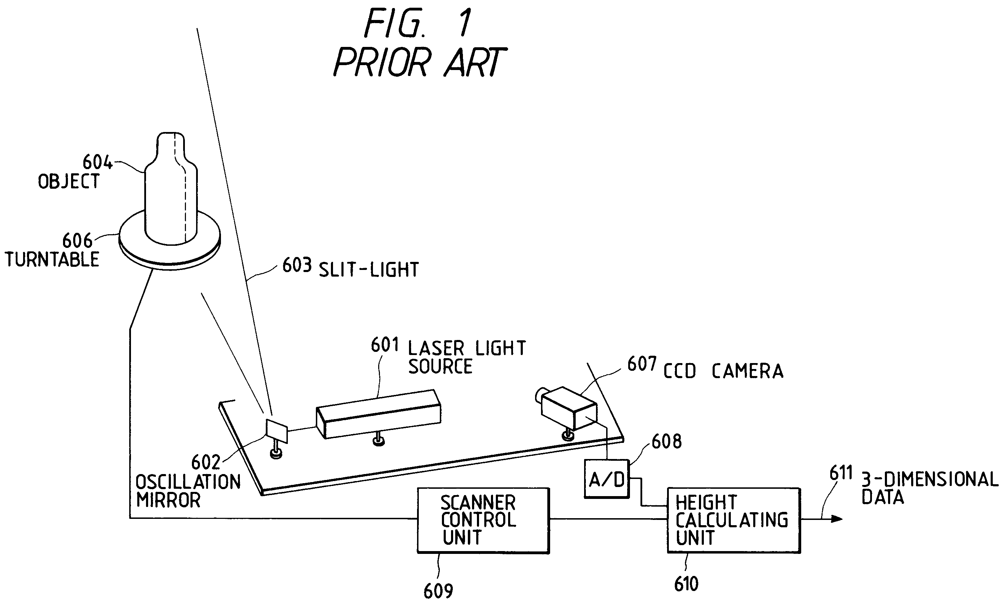

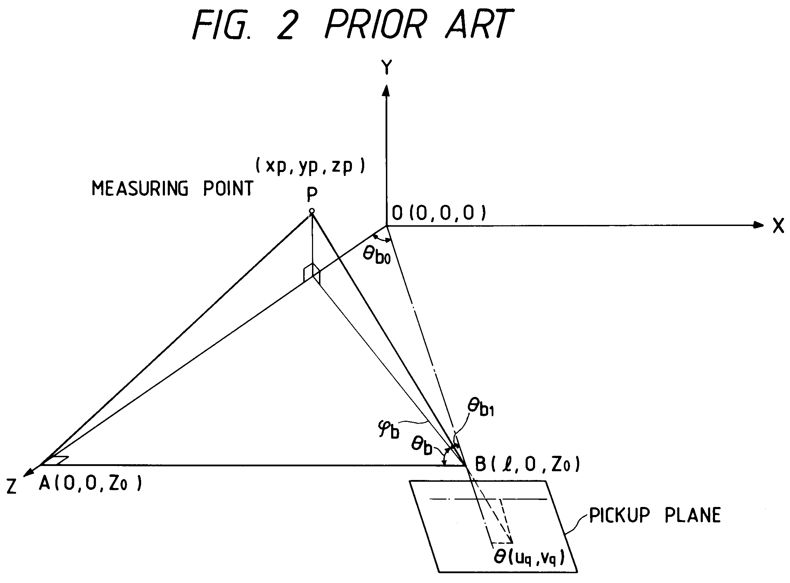

There has been used a conventional three-dimensional measuring instrument for measuring a micro-height of an object, which is provided with an XY table and a contacting element for measuring the height (namely, the dimension in Z-direction) of the object. The dimension in each of X-, Y- and Z-directions of the object is measured or read, putting the object on the XY table and bringing the contacting element into contact with the object. Such a three-dimensional measuring instrument has drawbacks in that it is very time-consuming to measure or obtain three dimensional data on a region having a spread and in that there is a limit to a pitch in X- and Y-directions due to the size of the contacting element. Further, there has been used a non-contacting three dimensional image data input system as illustrated in FIG. 1, which employs a light sectioning method. In FIG. 1, reference numeral 601 designates a laser light source for emitting laser beams (hereunder sometimes referred to as spot-laser-light); 602 an oscillation mirror for converting the spot-laser-light into what is called slit-light which is equivalent to light emitted from a slit; 603 the slit-light; 604 an object to be measured; 606 a turntable for rotating the object put thereon; 607 a charge-coupled-device (CCD) camera; 608 an analog-to-digital (A/D) converter for converting an output signal of the CCD camera 607 into a digital signal; 609 a scanner control unit for controlling the entire system; 610 a height calculating unit for calculating the height of the object from an image formed by the slit-light 603, namely, scattered light; and 611 a signal representing three-dimensional data obtained by this system. Further, in this system, the spot-laser light emitted from the laser source 601 is converted by the oscillation mirror 602 into the slit-light 603 which is irradiated on the object 604. Furthermore, the object 604 put on the turntable 606 rotates together with the turntable, receiving the slit-light 603. The CCD camera 607 picks up, namely, receives the scattered slit-light corresponding to each scene of the object, which is rotating, in synchronization with the rotation of the object. In this case, as the result of taking a picture of a scene by using the CCD camera 607, unevennesses corresponding to ruggednesses of the surface of the object 604 are shown in an image formed by the scattered slit-light. The A/D converter 608 converts a signal outputted from the CCD camera 607 to a digital signal and further transmits the digital signal to the height calculating unit 610. Then, in the height calculating unit 610, the digital picture signal is stored in a memory thereof. Further, in each vertical scanning direction, a point Q $(u_q, w_q)$, at which the luminance has a maximum value, is found and an image of a point to be measured (hereunder referred to simply as a measuring point) is considered as formed at the found point. The coordinates of the measuring point Q are calculated as follows. For simplicity of calculation, it is assumed that the CCD camera 607 is set and the slit-light is propagated in an orthogonal coordinates system as illustrated in FIG. 2. The method of the calculation will be described hereinbelow. Namely, a point of intersection of the slit-light 603 and the CCD camera 607 is set to be an origin 0(0,0,0). Further, an XZ-plane is placed in such a manner to meet at right angle with the slit-light 603. Thus the direction, in which the slit-light 603 advances, is included in a YZ-plane, and the CCD camera 607 is mounted on the XZ-plane. Here, let $P(x_p, y_p, z_p)$, $B(\ell, 0, z_o)$, A-(0, 0, z_o) and $Q(u_q, w_q)$ denote the coordinates of a measuring point P, the coordinates of the position of the CCD camera 607, the coordinates of a point A of intersection of the perpendicular from the position of the CCD camera 607 and the YZ-plane and the coordinates of the position Q of an image of the measuring point P formed on the light receiving plane of the CCD camera 607, respectively. In such a case, the following equations (1) holds and the coordinates of the measuring point P can be obtained therefrom.

$$x_p = 0$$
$$y_p = \ell \cdot \tan \phi_b / \cos \theta_b$$
$$z_p = z_o - \ell \cdot \tan \theta_b \qquad (1)$$

where
$\theta_b = \pi /2 - (\theta_{b1} + \theta_{bo})$;
$\theta_{b1} = \tan^{-1} (k_u \cdot u_q / f)$;
$\phi_b = \tan^{-1}(k_u \cdot w_q / f)$;
$\ell$ : the length of a ground line or vase line;
$Z_o$ : the distance between the points A and O;
$\theta_{bo}$ : an sectional angle determined by the slit-light and a segment drawn from the origin to the position B of the CCD camera;
$k_u$ : a coefficient for calculating a shift amount from a u-coordinate of the position of the CCD camera on a pickup plane (namely, a taking plane);
$k_w$ : a coefficient for calculating a shift amount from a w-coordinate of the position of the CCD camera on the pickup plane;

$u_q$ : the u-coordinate of the position of the CCD camera on the pickup plane (incidentally, a point on the optical axis and on the pickup plane is established as an origin for calculating the u-coordinate);

$w_q$ : the u-coordinate of the position of the CCD camera on the pickup plane (incidentally, the point on the optical axis and on the pickup plane is established as the origin for calculating the w-coordinate); and

f : a focal distance of the CCD camera.

Thus three-dimensional data regarding a surface of the object, on which the laser slit-light is irradiated, can be obtained. Further, three-dimensional data on the entire object can be obtained by finding three-dimensional data corresponding to each angle of rotation of the object by rotating the object together with the turntable.

Such a conventional instrument, however, cannot receive slit-light scattered from a surface, on which the slit-light is not irradiated, or another surface, which is not seen from the CCD camera, of the object. The present invention is created to eliminate such a defect of the conventional instrument.

It is, accordingly, an object of the present invention to a three-dimensional image data input system which can obtain higher quality three-dimensional data by eliminating a surface, on which slit-light is not irradiated, and another surface, which is not seen from the CCD camera, of an object to be measured.

Next, another drawback of the prior art will be described hereinafter.

In recent years, a non-contacting three-dimensional shape data reading system employing a light sectioning method or a Moire topography method has been in strong demand because of short measuring time and readiness of handling, instead of a contacting three-dimensional shape data reading system. However, there have been demands for improvement of precision of measurement performed by using such a non-contacting three-dimensional shape data reading system.

Hereinafter, a conventional non-contacting three-dimensional shape data reading system employing an ordinary light sectioning method will be described.

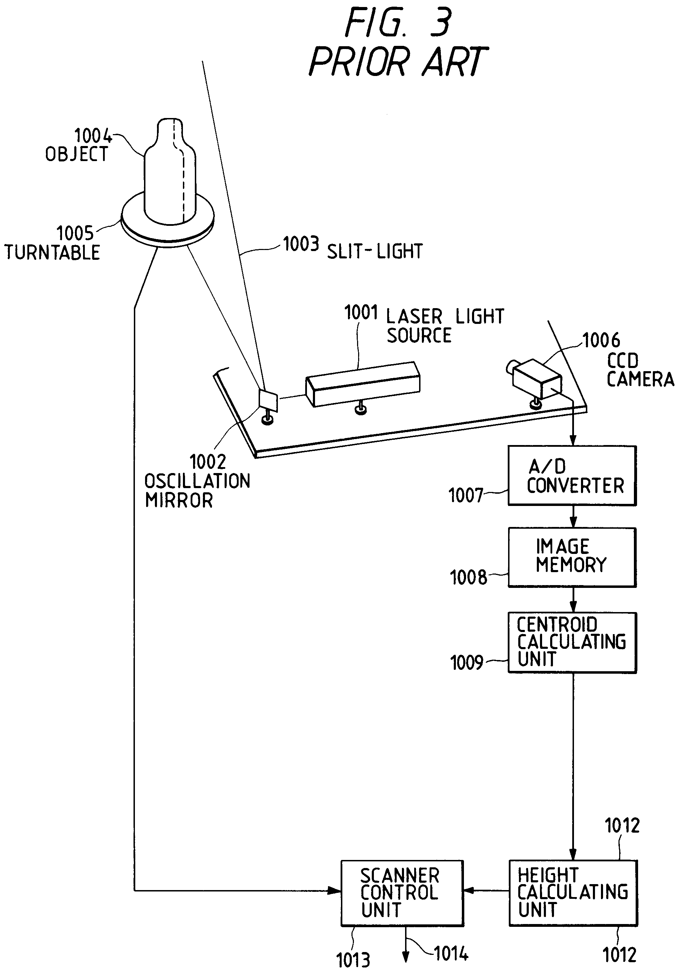

FIG. 3 is a diagram for showing the construction of this conventional non-contacting three-dimensional shape data reading system. In FIG. 3, reference numeral 1001 designates a laser light source for generating a laser beam or spot-laser-light; 1002 an oscillation mirror for converting spot-laser-light into slit-light; 1003 the slit-light; 1004 an object to be measured; 1005 a turntable for rotating the object put thereon; 1006 a CCD camera for reading light (hereunder sometimes referred to simply as scattered light) obtained by scattering the slit-light 1003; 1007 an A/D converter for converting an output signal of the CCD camera 1006 into a digital signal; 1008 an image memory for storing an image signal; 1009 a centroid calculating unit for calculating the centroid of a picture formed by the scattered slit-light from the object (namely, calculating the "center of gravity" in case of regarding the luminance at each point of the picture as the "mass" thereof); 1012 a height calculating unit for calculating three-dimensional coordinates from the centroid; 1013 a scanner control unit for controlling the entire system; and 1014 a signal representing three-dimensional shape data obtained by this system.

Hereinafter, an operation of the three-dimensional shape data reading system constructed as described above will be explained. The spot-laser-light emitted from the laser light source 1001 is transformed by the oscillation mirror 1002 into the slit-light 1003 which is then irradiated on the object 1004. The object 1004 rotates around the axis of rotation of the turntable 1005, receiving the slit-light. The CCD camera 1006 receives the scattered slit-light corresponding to each scene of the object, which is rotating, in synchronization with the rotation of the object. In this case, as the result of taking a picture of a scene by using the CCD camera 1006, unevennesses corresponding to ruggednesses of the surface of the object 1004 are shown in an image formed by the scattered slit-light. The A/D converter 1007 converts a signal outputted from the CCD camera 1006 to a digital signal which is temporarily stored in the image memory 1008 as an image signal. The centroid calculating unit 1009 finds the centroid of the picture, which is represented by the image signal and is formed by the slit-light scattered from the object, in each vertical scanning direction by regarding the luminance at each point of the picture as the "mass" thereof. Subsequently, the height calculating unit 1012 calculates three-dimensional coordinates of the measuring point according to principles of trigonometry by using the length of the ground line or vase line (namely, the distance between the slit-light and the CCD camera), the sectional angle (namely, the angle determined by the slight-light and the optical axis of the CCD camera) and an angle determined by the optical axis of the CCD camera and a segment drawn from the position of the CCD camera to the measuring point by regarding the centroid as the measuring point. Thus three-dimensional shape data representing the shape of the object are obtained correspondingly to the slit-light. Further, three-dimensional shape data on the entire object can be obtained by controlling and synchronizing a rotation of the turntable and the calculation by means of the scanner control unit 1013.

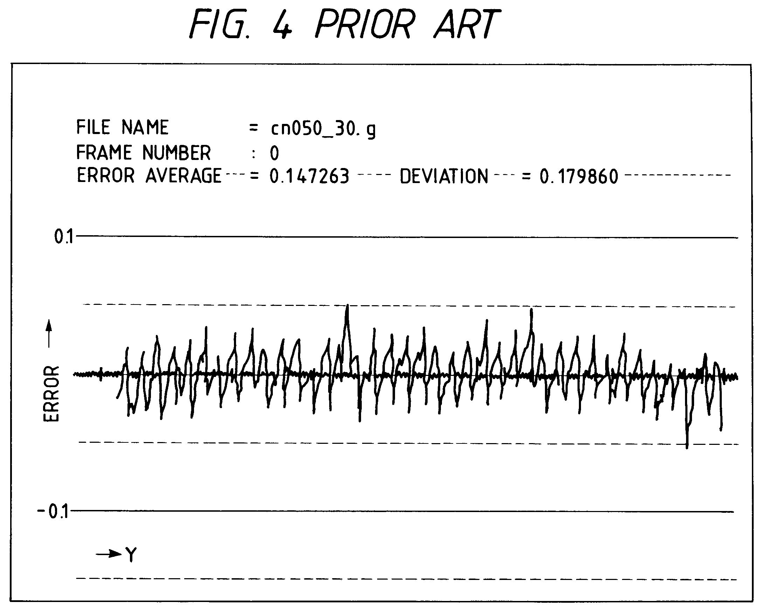

As above described, this conventional three-dimensional shape data reading system performs a centeroid-calculating operation on sampled data represented by the image signal and calculates the coordinates of the measuring point by regarding the centroid as the center of the image formed by the scattered slit-light. When reading three-dimensional data representing an inclined surface of the object, the three-dimensional data include periodic errors as shown in FIG. 4. Thus this conventional three-dimensional shape data reading system has encountered a problem of how to reduce such errors. The present invention is accomplished to solve such a problem of the prior art.

It is, therefore, another object of the present invention to provide a three-dimensional which can obtain three-dimensional shape data having higher measuring precision by detecting the center of the image formed by the scattered slit-light.

SUMMARY OF THE INVENTION

To achieve the foregoing object, in accordance with an aspect of the present invention, there is provided a three-dimensional image data input system, which comprises a slit-light source for generating slit-light, a turntable for rotating an object to be measured, a top reflection mirror provided over the object in such a manner to meet at right angles with a beam of the slit-light, a camera for taking an image formed by the scattered slit-light from the object and another image formed by light obtained by reflecting the scattered slit-light on the same pickup plane and a distance calculating unit for calculating a distance between a measuring point of the object and an origin on the basis of an electric signal outputted from the camera indicating a position of an image, which is formed by the slit-light scattered from the object, of the measuring point of the object and another electric signal outputted from the camera indicating a position of another image, which is formed by light obtained by reflecting the slit-light scattered from the object by the top reflection mirror.

Thus good-quality three-dimensional data can be obtained by eliminating a surface, on which the slit-light is not irradiated, and another surface, which is not seen from the CCD camera, of the object.

Further, in accordance with another aspect of the present invention, there is provided a three-dimensional image data input system, which comprises a slit-light source for generating slit-light, a moving mechanism for moving an object to be measured, a top reflection mirror provided over the object in such a manner to meet at right angles with a beam of the slit-light, a camera for taking an image formed by the scattered slit-light from the object and another image formed by light obtained by reflecting the scattered slit-light on the same pickup plane and a distance calculating unit for calculating a distance between a measuring point of the object and an origin on the basis of an electric signal outputted from the camera indicating a position of an image, which is formed by the slit-light scattered from the object, of the measuring point of the object and another electric signal outputted from the camera indicating a position of another image, which is formed by light obtained by reflecting the slit-light scattered from the object by the top reflection mirror.

Thus three-dimensional data on top and side surfaces of the object corresponding to a beam of the slit-light can be obtained. Because these two pieces of the three-dimensional data are complemented with each other, high-precision three-dimensional data can be obtained by synthsizing these data. Consequently, good-quality three-dimensional data can be obtained by eliminating a surface, on which the slit-light is not irradiated, and another surface, which is not seen from the CCD camera, of the object.

To achieve the other object, in accordance with still another aspect of the present invention, there is provided a three-dimensional shape data reading system, which comprises a slit-light source for generating slit-light, a moving mechanism for moving an object to be measured, a camera for taking an image formed by scattered slit-light from the object, an A/D converter for converting a luminance signal into a digital image signal, an image memory for storing the image signal, a centeroid detecting unit for detecting the centroid of a picture formed by the slit-light scattered by the object from the image signal stored in the image memory, phase shift amount detecting unit for detecting a phase shift amount between the center of the picture formed by the scattered slit-light and a sampling pitch, a center detecting unit for detecting the center of the picture by correcting the centroid from the phase shift amount and a height calculating unit for calculating three-dimensional coordinates of a measuring point of the object from the detected center.

Thus the center of the picture formed by the scattered slit-light having little error can be obtained. Consequently, higher-precision three-dimensional shape data can be obtained.

BRIEF DESCRIPTION OF THE DRAWINGS

Other features, objects and advantages of the present invention will become apparent from the following description of preferred embodiments with reference to the drawings in which like reference characters designate like or corresponding parts throughout several views, and in which:

FIG. 1 is a diagram for illustrating a conventional method of obtaining height data;

FIG. 2 is a schematic block diagram for illustrating the construction of a conventional three-dimensional image data input system;

FIG. 3 is a schematic block diagram for illustrating the construction of a conventional three-dimensional shape data reading system;

FIG. 4 is a diagram for illustrating errors which occurs in data obtained by a conventional three-dimensional shape data reading system;

FIG. 5 is a schematic block diagram for illustrating the construction of a three-dimensional image data input system embodying the present invention;

FIG. 6 is a diagram for illustrating a positional relation among an object to be measured by the system of FIG. 5, a top reflection mirror thereof and a virtual image of the object;

FIG. 7 is a diagram for illustrating how a CCD camera of the system of FIG. 5 takes a picture of the object;

FIG. 8(a) is a diagram for illustrating three-dimensional data regarding a top surface of the object to be measured by the system of FIG. 5;

FIG. 8(b) is a diagram for illustrating three-dimensional data regarding a side surface of the object to be measured by the system of FIG. 5;

FIG. 9 is a schematic block diagram for illustrating the construction of another three-dimensional image data input system embodying the present invention;

FIG. 10 is a schematic block diagram for illustrating the construction of a three-dimensional shape data reading system embodying the present invention;

FIG. 11 is a diagram for illustrating a result of simulation of errors occurring in the phase shift amount when sampling data;

FIG. 12 is a diagram for illustrating principles of the simulation of the sampling;

FIG. 13 is a diagram for illustrating a case where a phase shift amount occurring in the system of FIG. 10 is small;

FIG. 14 is a diagram for illustrating a case where a phase shift amount occurring in the system of FIG. 10 is large;

FIG. 15 is a graph of an error function employed in the system of FIG. 15; and

FIG. 16 is a diagram for illustrating errors occurring in data obtained by the system of FIG. 16.

## DETAILED DESCRIPTION OF THE PREFERRED EMBODIMENTS

Hereinafter, preferred embodiments of the present invention will be described in detail by referring to the accompanying drawings.

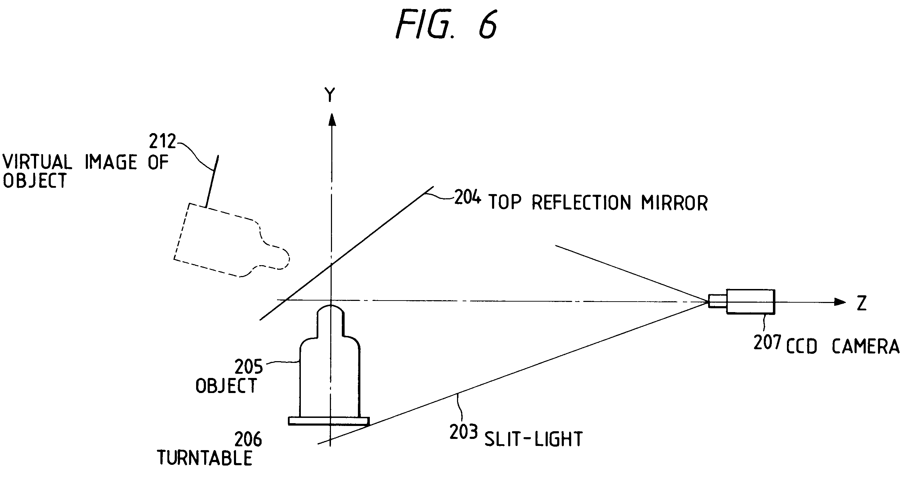

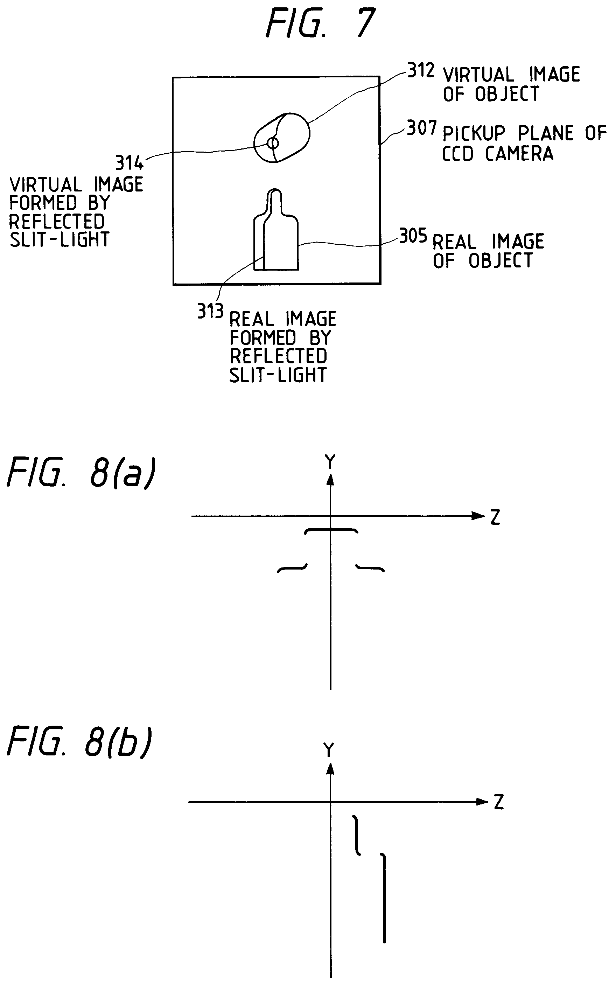

First, a three-dimensional image data input system of the present invention is characterized by comprising a top reflection mirror, which meets at right angles with as beam of slit-light and is provided over an object to be measured, in addition to the composing elements of tee conventional three-dimensional image data input system. This characteristic feature will be described by referring to FIGS. 6, 7 and 8 before explaining a first emboiment of the present invention. In FIG. 6, reference numeral 203 represents slit-light; 204 a top reflection mirror; 205 an objected to be measured; 206 a turntable; and 207 a CCD camera. FIG. 7 illustrates how the CCD camera of FIG. 6 takes a picture of the object. In FIG. 7, reference numeral 305 denotes a real image of the object; 307 a pickup plane (namely, a taking plane) of the CCD camera; 312 a virtual image of the object; 313 a real image formed by scattered slit-light; and 314 a virtual image formed by the scattered slit-light. FIG. 8(b) illustrates an example of three-dimensional data regarding a side surface of the object, which are obtained correspondingly to a beam of the slit-light. FIG. 8(a) illustrates an example of three-dimensional data regarding a top surface of the object, which are obtained correspondingly to a beam of the slit-light. Incidentally, a coordinate system of FIG. 6 is established in such a fashion that XY-plane intersects the slit-light 203 orthogonally and that an origin is a point of intersection of the slit-light 203 and an optical axis of the CCD camera 207. FIG. 6 shows a view taken from the positive direction along X-axis. With such a configuration, an image 305 of the object and a real image 313, which is formed by the scattered slit-light, are formed on a lower half of the pickup plane of the CCD camera 207 and a virtual image 312 of the object and a virtual image, which is formed by the scattered slit-light, are formed on an upper half of the pickup plane thereof as illustrated in FIG. 7. Further, a point having maxium luminance in each vertical scanning direction is detected from the images formed on the lower half. Then three-dimensional image data regarding a side surface of the object can be obtained by regarding the detected point as an image of a measuring point of the object and calculating the equation (1). Similarly, a point having maxium luminance in each vertical scanning direction is detected from the images formed on the upper half. Then three-dimensional image data regarding a virtual image of a top surface of the object can be obtained by regarding the detected point as a virtual image of a measuring point of the object and calculating the equation (1). The corresponding relation between a virtual image of a point and a real image thereof can be obtained by the following equation:

$$\mathbf{R} = \mathbf{V} - 2(\mathbf{a} \cdot \mathbf{V} - \mathbf{1}) / \| \mathbf{a} \|^2 \quad (2)$$

where $\mathbf{V}$ denotes the position vector of the virtual image; $\mathbf{R}$ the position vector of the real image; and a a normal vector with respect to the surface of the top reflection mirror. Thereby, three-dimensional image data regarding the top surface of the object can be obtained. Thus, three-dimensional data as shown in FIGS. 8 (a) and (b) respectively corresponding to images, which is formed by a slit-light beam, of the top and side surfaces of the object can be obtained. These data are complemented with each other. Consequently, higher-precision three-dimensional image data can be obtained.

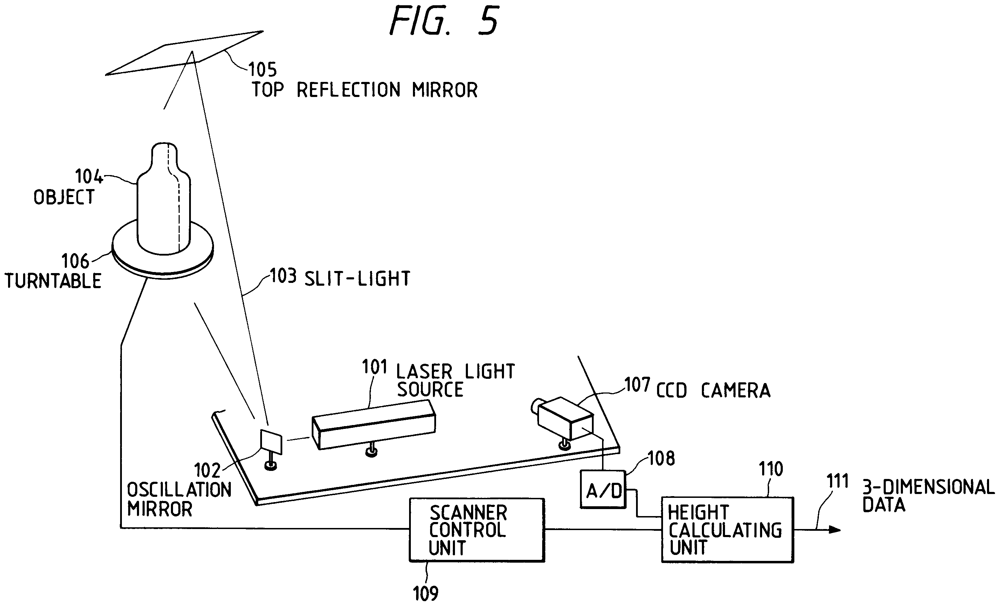

Hereinafter, the first embodiment of the present invention will be described in detail by referring to FIG. 5.

In FIG. 5, reference numeral 101 a laser light source for generating spot-laser-light; 102 an oscillation mirror for converting the spot-laser-light to slit-light; 103 the slit-light; 104 an object to be measured; 105 a top reflection mirror provided over the object 104; 106 a turntable for rotating the object 104; 107 a CCD camera for reading or receiving light obtained by scattering the slit-light or by reflecting the scatterd slit-light by the top reflection mirror; 108 an A/D converter for converting an output signal of the CCD camera 107 into a digital signal; 109 a scanner control unit for controlling the entire system; 110 a height calculating unit for calculating the height of the object from the digital signal; and 111 a signal representing three-dimensional data obtained by this system.

In such a system, the spot-laser-light from the source 101 is converted by the oscillation mirror 102 into the slit-light 103. Further, the slit-light is irradiated on the side surface of the object 104. Moreover, light obtained by reflecting the slit-light 103 by means of the top reflection mirror 105 is irradiated on the top surface of the object 104. In this case, the top reflection mirror 105 is provided orthogonally to a beam of the slit-light 103 in such a manner that a beam of the slit-light 103 and a beam obtained by reflecting the beam of the slit-light by use of the top reflection mirror 105 are on the same plane. The CCD camera 107 forms the real image of the object and that formed by the scattered slit-light on the lower half of the pickup plane thereof and also forms the virtual image of the object 104 and that formed from the light obtained by reflecting the slit-light by means of the top reflection mirror on the upper half of the pickup plane thereof. Luminance data are transmitted through the A/D converter 108 to the height calculating unit 110. Further, the scanner control unit 109 controls the entire system in such a manner to synchronize the rotation of the turntable, the reading operation of the CCD camera 107 and the height calculating operation of the height calculating unit 110 with one another.

The height calculating unit 110 is comprised of a microcomputer, a memory and an input/output (I/O) interface and obtains three-dimensional image data by performing the following procedure by executing software. Namely, digital luminance data corresponding to the slit-light at the time of turning the object an angle of $\alpha$ from the reference coordinate are inputted to the memory thereof through the I/O interface. As illustrated in FIG. 7, data regarding the virtual image 312 of the object and that 314 formed by the scattered slit-light are stored in an upper half of a corresponding storage region of the memory. Further, a point $Q(u_q, w_q)$ having maximum luminance in each vertical scanning direction is detected from the images formed on the lower half. Then the coordinates $(x_p, y_p, z_p)$ of a measuring point P corresponding to the point Q is obtained by calculating the equation (1). Similarly, another measuring point $V(x_v, y_v, z_v)$ of the virtual image is calculated from the luminance data stored in the upper half. Then, a measuring point $R(x_r, y_r, z_r)$ of the real image corresponding to the measuring point $V(x_v, y_v, z_v)$ of the virtual image is found by calculating the equation (2). Thus the shape data regarding the top and side surfaces of the object of FIGS. 8 (a) and (b), which correspond to the slit-light when the object is turned the angle $\alpha$, are obtained. Here, let $\phi$ denote a group of points, each of which has $z_r$ of 0 or a positive value. Subsequently, the points of the group $\phi$ are ordered as follows.

① First, a point $R_o$ having a minimum $y_r$ is detected among a group of points each having a minimum $z_r$. Further, the point $R_o$ is removed from the points of the group $\phi$.

② Next, a point $R_{i+1}$, which is apart from a point $R_i$ by a minimum distance, is detected among the points of the rest of the group $\phi$ (i = 0, 1, 2, 3, ... ). Then, the point $R_{i+1}$ is removed from the group $\phi$. Namely, the step ① is first performed and thereafter the step ② is performed repeatedly and functionally. Thereby, a sequence $\Psi$ of effective points $(R_1, R_2, ..., R_N)$ are obtained. Subsequently, three-dimensional image data regarding a surface of the object turned by the angle $\alpha$ are obtained by performing the following operation:

$$\mathbf{R}_j \cdot \mathbf{T} \quad (3)$$

on the coordinates $\mathbf{R}_j$ of each point $R_j$ (j = 1, 2,

..., N) and a rotation transformation matrix (namely, a rotor) **T** defined as follows:

$$T = \begin{array}{ccc} \cos\alpha & 0 & -\sin\alpha \\ 0 & 1 & 0 \\ \sin\alpha & 0 & -\cos\alpha \end{array}$$

In the first embodiment, the operation (3) is performed in synchronization with the rotation of the turntable 106 by means of the scanner control unit 109 and the height calculating unit 110. Thus three-dimensional image data regarding the object turned each rotation angle are first obtained. Finally, three-dimensional image data regarding the entire object are obtained.

Thus the three-dimensional image data regarding the top and side surfaces of the object as illustrated in FIGS. 8 (a) and (b) are obtained in the first embodiment. Consequently, in comparison with the conventional three-dimensional image data input system, the first embodiment can obtain good-quality three-dimensional image data.

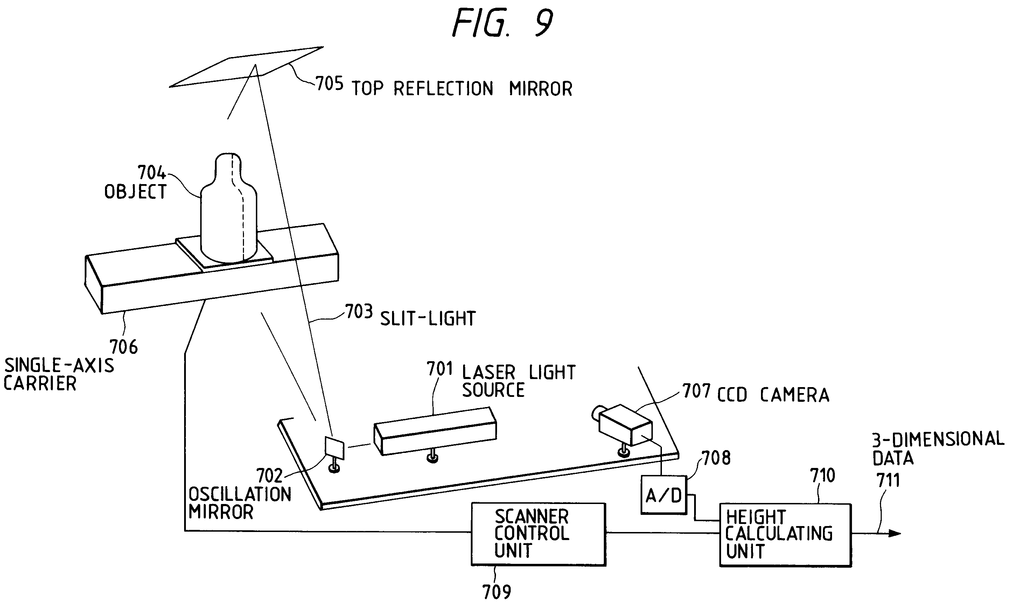

Next, a second embodiment of the present invention will be described in detail hereinbelow by referring to FIG. 9.

In FIG. 9, reference numeral 701 a laser light source for generating spot-laser-light; 702 an oscillation mirror for converting the spot-laser-light to slit-light; 703 the slit-light; 704 an object to be measured; 705 a top reflection mirror provided over the object 704; 706 a general purpose single axis carrier for moving the object 704; 707 a CCD camera for reading or receiving light obtained by scattering the slit-light 703 or by reflecting the scattered slit-light by the top reflection mirror; 708 an A/D converter for converting an output signal of the CCD camera 707 into a digital signal; 709 a scanner control unit for controlling the entire system; 710 a height calculating unit for calculating the height of the object from the digital signal; and 711 a signal representing three-dimensional data obtained by this system.

In such a system, the spot-laser-light from the source 701 is converted by the oscillation mirror 702 into the slit-light 703. Further, the slit-light is irradiated on the side surface of the object 704. Moreover, light obtained by reflecting the slit-light 703 by means of the top reflection mirror 705 is irradiated on the top surface of the object 704. In this case, the top reflection mirror 705 is provided orthogonally to a beam of the slit-light 703 in such a manner that a beam of the slit-light 703 and a beam obtained by reflecting the beam of the slit-light by use of the top reflection mirror 105 are on the same plane. The CCD camera 707 forms the real image of the object and that formed by the scattered slit-light on the lower half of the pickup plane thereof and also forms the virtual image of the object 704 and that formed from the light obtained by reflecting the slit-light by means of the top reflection mirror on the upper half of the pickup plane thereof. Luminance data are transmitted through the A/D converter 708 to the height calculating unit 710. Further, the scanner control unit 709 controls the entire system in such a manner to synchronize the movement of the single axis carrier, the reading operation of the CCD camera 707 and the height calculating operation of the height calculating unit 710 with one another.

The height calculating unit 710 is comprised of a microcomputer, a memory and an input/output (I/O) interface and obtains three-dimensional image data by performing the following procedure by executing software. Namely, digital luminance data corresponding to the slit-light at the time of moving the object by a distance d from the reference coordinate are inputted to the memory thereof through the I/O interface. As illustrated in FIG. 7, data regarding the virtual image 312 of the object and that 314 formed by the scattered slit-light are stored in an upper half of a corresponding storage region of the memory. Further, a point $Q(u_q, w_q)$ having maximum luminance in each vertical scanning direction is detected from the images formed on the lower half. Then the coordinates $(x_p, y_p, z_p)$ of a measuring point P corresponding to the point Q is obtained by calculating the equation (1). Similarly, another measuring point $V(x_v, y_v, z_v)$ of the virtual image is calculated from the luminance data stored in the upper half. Then, a measuring point $R(x_r, y_r, z_r)$ of the real image corresponding to the measuring point $V(x_v, y_v, z_v)$ of the virtual image is found by calculating the equation (2). Thus the shape data regarding the top and side surfaces of the object of FIGS. 8 (a) and (b), which correspond to the slit-light when the object is moved by the distance d, are obtained. Here, let $\phi'$ denote a group of points represented by the shape data. Subsequently, the points of the group $\phi'$ are ordered as follows.

①' First, a point $R_i$ having a minimum $z_r$ is detected among the group $\phi'$ of points. Further, the point $R_i$ is removed from the points of the group $\phi'$.

②' Next, a point $R_{i+1}$, which is apart from a point $R_i$ by a minimum distance, is detected among the points of the rest of the group $\phi'$ (i = 1, 2, 3. ... ). Then, the point $R_{i+1}$ is removed from the group $\phi'$. Namely, the step ①' is first performed and thereafter the step ②' is performed repeatedly and functionally. Thereby, a sequence $\Psi'$ of effective points $(R_1, R_2, ..., R_N)$

are obtained as three-dimensional regarding the surface of the object moved by the distance d from the reference coordinates. In the second embodiment, the operation comprised of the steps ①' and ②' is performed in synchronization with the movement of the single axis carrier 706 by means of the scanner control unit 709 and the height calculating unit 710. Thus three-dimensional image data regarding the object moved by each shift amount are first obtained. Finally, three-dimensional image data regarding the entire object are obtained.

Thus, similarly as in case of the first embodiment, the three-dimensional image data regarding the top and side surfaces of the object as illustrated in FIGS. 8 (a) and (b) are obtained in the second embodiment. Consequently, in comparison with the conventional three-dimensional image data input system, the second embodiment can also obtain good-quality three-dimensional image data.

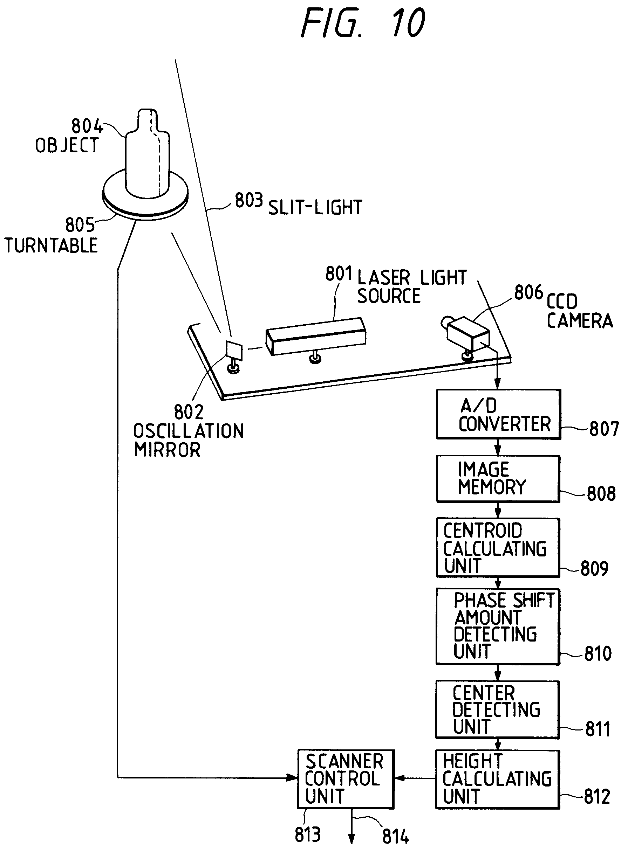

Next, a third embodiment of the present invention will be described in detail hereinbelow by referring to FIGS. 10 to 16.

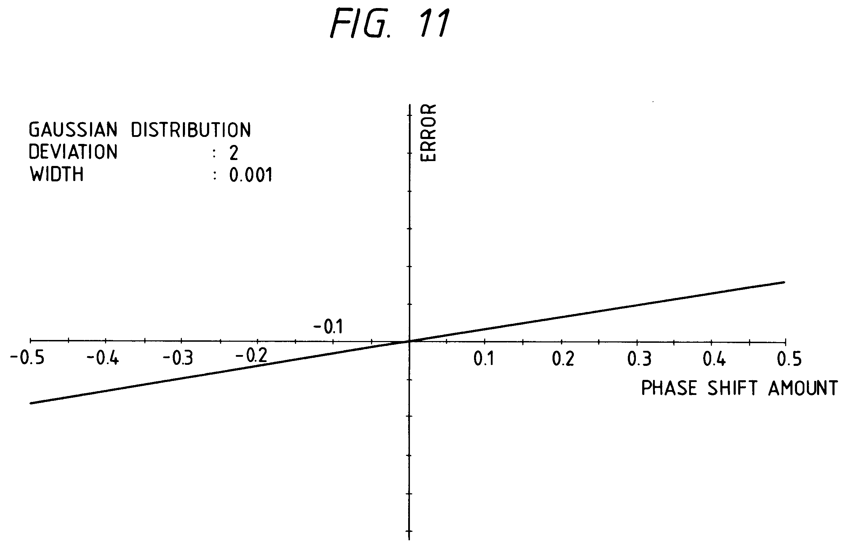

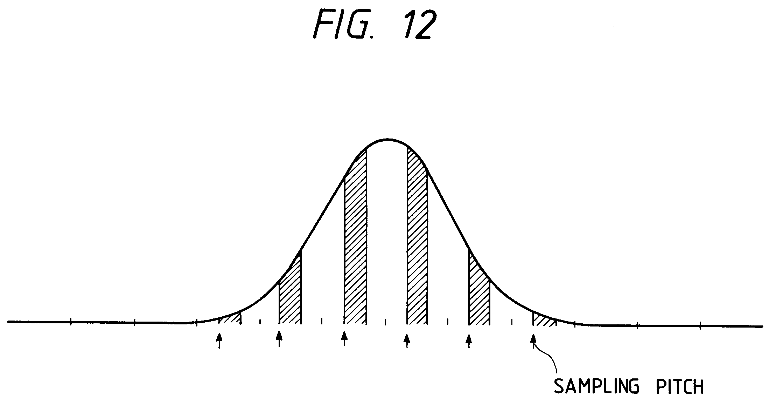

The third embodiment utilizes the property of a periodic error. The property of the periodic error can be analyzed by the following experiment. Namely, assuming that the intensity of slit-light has a normal distribution, the relation between a phase shift amount from the median of the normal distribution to a sampling pitch and an error from the centroid of sampled shape data to the median of the normal distribution as illustrated in FIG. 11 is obtained as the result of a computer simulation. Incidentally, FIG. 11 shows the result of the simulation in case of sampling a shaded portion of the normal distribution of FIG. 12. Further, the phase shift amount means an amount of shift of the shaded portion from the median of the normal distribution. As is seen from FIG. 11, the larger the phase shift amount from the median of the normal distribution to a sampling pitch becomes, the larger the error becomes.

FIG. 10 is a diagram for showing the construction of the third embodiment (namely, a three-dimensional shape data reading system embodying the present invention). In FIG. 10, reference numeral 801 designates a laser light source for generating a laser beam or spot-laser-light; 802 an oscillation mirror for converting spot-laser-light into slit-light; 803 the slit-light; 804 an object to be measured; 805 a turntable for rotating the object put thereon; 806 a CCD camera for reading scattered light obtained by scattering the slit-light 803; 807 an A/D converter for converting an output signal of the CCD camera 806 into a digital signal; 808 an image memory for storing an image signal; 809 a centroid calculating unit for calculating the centroid of a picture formed by the slit-light scattered from the object and represented by the image signal; 810 a phase shift amount detecting unit for detecting a phase shift amount between the center of the picture formed by the scattered slit-light and a sampling pitch; 811 a center detecting unit for detecting the center of the picture by correcting the centroid from the phase shift amount; 812 a height calculating unit for calculating three-dimensional coordinates from the centroid; 813 a scanner control unit for controlling the entire system; and 814 a signal representing three-dimensional shape data obtained by this system.

Hereinafter, an operation of the thus constructed three-dimensional shape data reading system will be described. The spot-laser-light emitted from the laser light source 801 is transformed by the oscillation mirror 802 into the slit-light 803 which is then irradiated on the object 804. The object 804 rotates around the axis of rotation of the turntable 805, receiving the slit-light 803. The CCD camera 806 receives the scattered slit-light corresponding to each scene of the object, which is rotating, in synchronization with the rotation of the object. In this case, as the result of taking a picture of a scene by using the CCD camera 806, unevennesses corresponding to ruggednesses of the surface of the object 1004 are shown in an image formed by the scattered slit-light. The A/D converter 807 converts a signal outputted from the CCD camera 806 to a digital signal which is temporarily stored in the image memory 808 as an image signal. The centroid calculating unit 809 finds the centroid $u_q$ of the picture, which is represented by the image signal and is formed by the slit-light scattered from the object, in each vertical scanning line $w_q$ by regarding the luminance at each point of the picture as the "mass" thereof. Next, in the phase shift amount detecting unit 810, the center of the picture by correcting the centroid from the phase shift amount is detected by performing the following method. Namely, in each vertical scanning line to be measured, a point (hereunder sometimes referred to as a maximum point) having maximum luminance and points respectively placed at both sides of the maximum point are detected. Further, let $d_i$, $d_{i-1}$ and $d_{i+1}$ designate the luminance of the maximum point and those of the points respectively placed at both sides of the maximum point. If $d_{i-1}$ is less than $d_{i+1}$, an amount r is given by:

$$r = \{2 \times (d_{i+1} - d_{i-1})\} / (d_i + d_{i-1} - 2d_{i+1}) \qquad (4)$$

Conversely, if $d_{i-1}$ is greater than $d_{i+1}$, the amount r is given by:

$$r = \{2 \times (d_{i+1} - d_{i-1})\} / (d_i + d_{i+1} - 2d_{i-1}) \qquad (5)$$

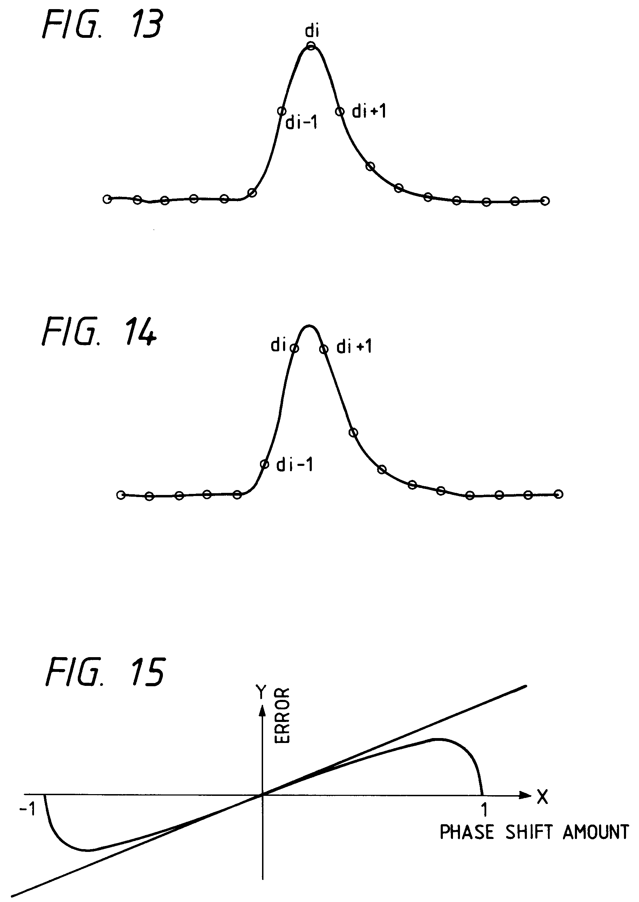

Thus the absolute value of the phase shift amount r is not greater than 1. Further, in case where $d_i$, $d_{i-1}$ and $d_{i+1}$ are as illustrated in FIG. 13, the absolute value of the phase shift amount r is small. In contrast, in case where $d_i$, $d_{i-1}$ and $d_{i+1}$ are as illustrated in FIG. 14, the absolute value of the phase shift amount r is large. Therefore, the amount r approximately represents the phase shift amount between the phases of the center and the sampling pitch. Next, the centroid is corrected by the center detecting unit 811 by performing the following method. Namely, the following error function y is employed:

$$y = k \times x - \{(c / x \pm \underline{a}) \pm b\} \quad (6)$$

where + or - of ± is selected in accordance with the sign of x. Further, the quantities $\underline{a}$ and b are respectively given by:

$$a = (1 + 1 + 4 \times c / k) / 2$$
$$\overline{b} = c / \underline{a}$$

This error function y is a hyperbolic function as illustrated in FIG. 15. Incidentally, k represents a parameter for controlling a maximal point and a minimal point; and c a parameter for controlling a maximal value and a minimal value. These parameters k and c are pre-set in this system before the calculation of the center. Incidentally, this error function y becomes 0 at x = ± 1 differently from the function of FIG. 11. This is to reduce errors of correction in the proximity of a point at which the sign of the amount r is inverted. Then, the center $u_q'$ is obtained by calculating the following equation:

$$u_q' = u_q - \{k \times r - \{(c / r \pm \underline{a}) \pm b\} \quad (7)$$

Subsequently, regarding the thus obtained point Q-$(u_q'$ , $w_q)$ as an image of a measuring point, the position of the measuring point $P(x_p, y_p, z_p)$ is obtained by employing the same coordinate system as illustrated in FIG. 2 and calculating the equation (1).

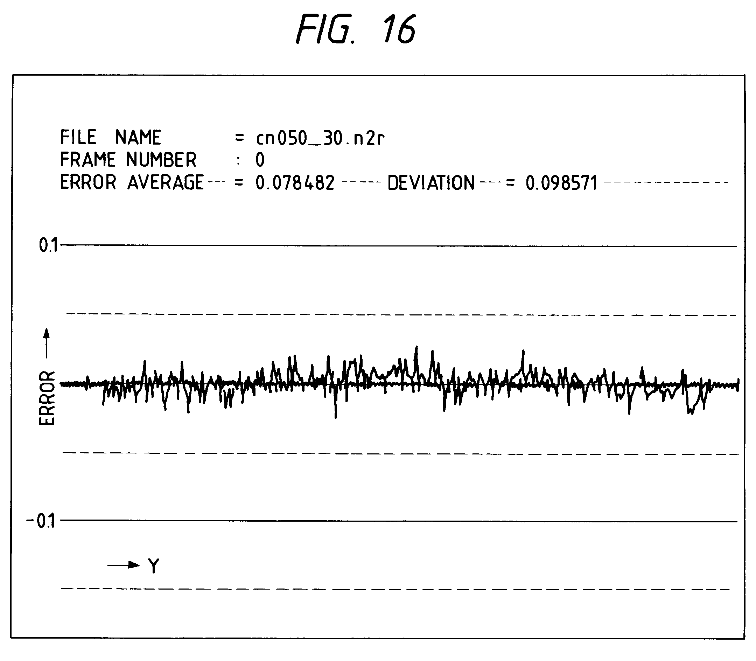

FIG. 16 is a graph showing three-dimensional shape data obtained by the third embodiment, which are measured under the same condition as in case of FIG. 4. As is apparent from comparison of FIG. 16 with FIG. 4, a periodic error as shown in FIG. 4 is eliminated in case of FIG. 16.

Thus, in comparison with the conventional three-dimensional shape data reading system, the third embodiment obtains higher-precision three-dimensional shape data.

Incidentally, in the third embodiment, the centroid detecting unit, the phase shift amount unit, the center detecting unit and the height calculating unit are implemented by executing software in a microcomputer. These units, however, may be implemented by using hardware technique based on recent digital circuit techniques (or using firmware). Further, in the phase shift amount unit, any other equations having the same functions as the equations (4) and (5) have may be employed. Moreover, in the center detecting unit, any other equations having the same function as the equation (6) has may be employed. Furthermore, a correction amount for correcting the centeroid may be preliminarily calculated regarding the phase shift amount and stored in the memory and thereafter, when calculating the center, the preliminarily stored correction amount may be referred by employing, for instance, what is called a table lookup method.

While preferred embodiments of the present invention have been described above, it is to be understood that the present invention is not limited thereto and that other modifications will be apparent to those skilled in the art without departing from the spirit of the invention. The scope of the present invention, therefore, is to be determined solely by the appended claims.

A three-dimensional shape data reading system provided with a slit-light source for generating slit-light, a moving mechanism for moving an object to be measured, a camera for taking an image formed by scattered slit-light from the object, an analog-to-digital converter for converting a luminance signal into a digital image signal, an image memory for storing the image signal, a centeroid detecting unit for detecting the centroid of a picture formed by the slit-light scattered by the object from the image signal stored in the image memory, phase shift amount detecting unit for detecting a phase shift amount between the center of the picture formed by the scattered slit-light and a sampling pitch, a center detecting unit for detecting the center of the picture by correcting the centroid from the phase shift amount and a height calculating unit for calculating three-dimensional coordinates of the object from the detected center. Thus three-dimensional shape data can be obtained with high-precision.

**Claims**

1. A three-dimensional image data input system comprising:

   a slit-light source means for generating slit-light;

   a turntable means for rotating an object to be measured;

   a top reflection mirror means provided over the object in such a manner to meet at right angles with a beam of the slit-light;

   a camera means for taking an image formed by the scattered slit-light from the object and another image formed by light obtained by reflecting the scattered slit-light on the same pickup plane thereof; and

a distance calculating means for calculating a distance between a measuring point of the object and an origin on the basis of an electric signal outputted from the camera means indicating a position of an image, which is formed by the slit-light scattered from the object, of the measuring point of the object and another electric signal outputted from the camera means indicating a position of another image, which is formed by light obtained by reflecting the slit-light scattered from the object by the top reflection mirror means.

2. A three-dimensional image data input system comprising:

a slit-light source means for generating slit-light;

an object moving means for moving an object to be measured;

a top reflection mirror means provided over the object in such a manner to meet at right angles with a beam of the slit-light;

a camera means for taking an image formed by the scattered slit-light from the object and another image formed by light obtained by reflecting the scattered slit-light on the same pickup plane thereof; and

a distance calculating means for calculating a distance between a measuring point of the object and an origin on the basis of an electric signal outputted from the camera means indicating a position of an image, which is formed by the slit-light scattered from the object, of the measuring point of the object and another electric signal outputted from the camera means indicating a position of another image, which is formed by light obtained by reflecting the slit-light scattered from the object by the top reflection mirror means.

3. A three-dimensional shape data reading system comprising:

a slit-light source means for generating slit-light;

an object moving means for moving an object to be measured;

a camera means for taking an image formed by scattered slit-light from the object and outputting a luminance signal;

an A/D converter means for converting the luminance signal into a digital image signal;

an image memory means for storing the image signal;

a centeroid detecting means for detecting the centroid of a picture formed by the slit-light scattered by the object from the image signal stored in the image memory means;

phase shift amount detecting means for detecting a phase shift amount between the center of the picture formed by the scattered slit-light and a sampling pitch;

a center detecting means for detecting the center of the picture by correcting the centroid from the phase shift amount; and

a height calculating means for calculating three-dimensional coordinates of a measuring point of the object from the detected center.

4. The three-dimensional image data input system as set forth in Claim 3, wherein the camera means outputs a luminance signal, the three dimensional image data input system further comprising:

an A/D converter means for converting the luminance signal into a digital image signal;

an image memory means for storing the image signal;

a centeroid detecting means for detecting the centroid of a picture formed by the slit-light scattered by the object from the image signal stored in the image memory means;

phase shift amount detecting means for detecting a phase shift amount between the center of the picture formed by the scattered slit-light and a sampling pitch; and

a center detecting means for detecting the center of the-picture by correcting the centroid from the phase shift amount, wherein the distance calculating means calculates the distances on the basis of the center detected by the center detecting means.

# FIG. 1
# PRIOR ART

604
OBJECT

606
TURNTABLE

603 SLIT-LIGHT

601 LASER LIGHT
SOURCE

607 CCD CAMERA

602
OSCILLATION
MIRROR

608

A/D

611 3-DIMENSIONAL
DATA

SCANNER
CONTROL
UNIT

609

HEIGHT
CALCULATING
UNIT

610

EP 0 488 292 A2

FIG. 2 PRIOR ART

EP 0 488 292 A2

# FIG. 3
# PRIOR ART

1004
OBJECT

1005
TURNTABLE

1003 SLIT-LIGHT

1001 LASER LIGHT
SOURCE

1006
CCD
CAMERA

1002
OSCILLATION
MIRROR

1007 — A/D CONVERTER

1008 — IMAGE MEMORY

1009 — CENTROID CALCULATING UNIT

1012

1013 — SCANNER CONTROL UNIT

HEIGHT CALCULATING UNIT — 1012

1014

1012

13

## FIG. 4 PRIOR ART

FILE NAME          = cn050_30. g
FRAME NUMBER    : 0
ERROR AVERAGE --- = 0.147263 ---- DEVIATION --- = 0.179860 ------------

EP 0 488 292 A2

# FIG. 5

- 105 TOP REFLECTION MIRROR
- 104 OBJECT
- 106 TURNTABLE
- 103 SLIT-LIGHT
- 101 LASER LIGHT SOURCE
- 107 CCD CAMERA
- 102 OSCILLATION MIRROR
- 108 A/D
- 109 SCANNER CONTROL UNIT
- 110 HEIGHT CALCULATING UNIT
- 111 3-DIMENSIONAL DATA

EP 0 488 292 A2

# FIG. 6

VIRTUAL IMAGE OF OBJECT — 212

204 TOP REFLECTION MIRROR

Y

205 OBJECT

206 TURNTABLE

203 SLIT-LIGHT

207 CCD CAMERA

Z

EP 0 488 292 A2

# FIG. 7

312 VIRTUAL IMAGE
OF OBJECT

307 PICKUP PLANE OF
CCD CAMERA

314
VIRTUAL IMAGE
FORMED BY
REFLECTED
SLIT-LIGHT

305 REAL IMAGE
OF OBJECT

313 REAL IMAGE
FORMED BY
REFLECTED
SLIT-LIGHT

# FIG. 8(a)

# FIG. 8(b)

## FIG. 9

705 TOP REFLECTION MIRROR

704 OBJECT

703 SLIT-LIGHT

706 SINGLE-AXIS CARRIER

701 LASER LIGHT SOURCE

707 CCD CAMERA

702 OSCILLATION MIRROR

708 A/D

709 SCANNER CONTROL UNIT

710 HEIGHT CALCULATING UNIT

711 3-DIMENSIONAL DATA

EP 0 488 292 A2

# FIG. 10

804
OBJECT

805
TURNTABLE

803 SLIT-LIGHT

801 LASER LIGHT
SOURCE

806 CCD
CAMERA

802
OSCILLATION
MIRROR

| A/D CONVERTER | —807 |

| IMAGE MEMORY | —808 |

| CENTROID CALCULATING UNIT | —809 |

| PHASE SHIFT AMOUNT DETECTING UNIT | —810 |

| CENTER DETECTING UNIT | —811 |

| SCANNER CONTROL UNIT | HEIGHT CALCULATING UNIT | —812 |

813      814

19

# FIG. 11

GAUSSIAN DISTRIBUTION
DEVIATION        : 2
WIDTH            : 0.001

ERROR

-0.1

-0.5    -0.4    -0.3    -0.2                    0.1    0.2    0.3    0.4    0.5

PHASE SHIFT AMOUNT

EP 0 488 292 A2

# FIG. 12

SAMPLING PITCH

FIG. 13

FIG. 14

FIG. 15

## FIG. 16

FILE NAME = cn050_30.n2r
FRAME NUMBER : 0
ERROR AVERAGE --- = 0.078482 ---- DEVIATION --- = 0.098571 -----------

ERROR

0.1

-0.1

→ Y